# EUROPÄISCHE PATENTSCHRIFT

(11) **EP 3 433 921 B1**
(45) Veröffentlichungstag und Bekanntmachung des Hinweises auf die Patenterteilung: **15.07.2020**
(21) Anmeldenummer: 17706470.6
(22) Anmeldetag: 21.02.2017
(51) Int. Cl.: H02K 9/197, H02K 15/12, H02K 9/22, H02K 5/20

(54) **ELEKTRISCHE MASCHINE MIT EINER KÜHLEINRICHTUNG**
ELECTRIC MACHINE HAVING A COOLING DEVICE
MACHINE ÉLECTRIQUE AVEC UNE INSTALLATION DE REFROIDISSEMENT

(30) Priorität: 24.03.2016 DE 102016204980
(43) Veröffentlichungstag der Anmeldung: 30.01.2019
(73) Patentinhaber: ZF Friedrichshafen AG, 88046 Friedrichshafen (DE)
(72) Erfinder: REICHERT, Heinz, 88677 Markdorf (DE); BORNTRÄGER, Kai, 88085 Langenargen (DE); MÜLLER, Axel Michael, 88048 Friedrichshafen (DE); TRÜBENBACH, Michael, 88045 Friedrichshafen (DE)
(74) Vertreter: ZF Friedrichshafen AG
(86) Internationale Anmeldenummer: PCT/EP2017/053935
(87) Internationale Veröffentlichungsnummer: WO 2017/162389

(56) Entgegenhaltungen:
- JP-A- 2005 354 821
- JP-A- 2009 201 217
- JP-A- 2011 142 786
- JP-U- H0 370 056
- JP-U- H0 636 363

## Beschreibung

Die Patentanmeldung betrifft eine elektrische Maschine mit einer Kühleinrichtung gemäß dem Oberbegriff von Patentanspruch 1.

Eine derartige elektrische Maschine ist bereits mit der DE 101 14 321 A1 bekannt geworden, wobei axial über ein Statorblechpaket überstehende Wickelköpfe einer Statorwicklung mit einem wärmeleitfähigen Kunststoff umgossen sind und über den Verguss mit einem Kühlmantel einer Fluidkühleinrichtung im Wärmeaustauschkontakt stehen. Auf diese Weise kann die in den Wickelköpfen entstehende Verlustwärme gemeinsam mit der im Statorblechpaket anfallenden Verlustwärme über ein gemeinsames Kühlsystem abgeführt und die Leistung der elektrischen Maschine gesteigert werden.

Es besteht dabei jedoch das Problem, dass bei einer radialen Wärmeableitung von den Wickelköpfen zu einer dazu radial außen angeordneten Kühleinrichtung ein Wärmetransport durch eine aufgrund geometrischer Gegebenheiten relativ mächtige radiale Vergussmittelschicht mit einer vergleichsweisen geringen Wärmeleitfähigkeit erfolgen muss, welche beim Betrieb der elektrischen Maschine zu einem unerwünschten Wärmestau, zum Ansteigen der Betriebstemperatur und zu einer Reduzierung der Effizienz führen kann.

Die JP2011142786 offenbart eine elektrische Maschine mit einem Stator, welcher unter Ausbildung eines radialen Luftspalts in ein Maschinengehäuse axial eingeführt und dort mittels eines am Stator stirnseitig ausgebildeten Radialflanschs durch Schraubbolzen festgelegt ist. Zur Abführung einer Verlustwärme weist die elektrische Maschine eine Fluidkühleinrichtung auf, wobei ein in der Rotorwelle geführtes Kühlfluid über radiale Austrittsöffnungen in den Rotorraum eintreten kann. Axial beidseitig am Rotor und am Stator sind Fluidleitelemente mit jeweils kegel- bzw. konusförmigen Fluidabweisflächen vorgesehen, welche ein Kühlfluid einerseits an dem zwischen Rotor und Stator vorhandenen radialen Luftspalt und andererseits auch an der Innenumfangsfläche der Wickelköpfe vorbeigeführen. Das am Stator eingesetzte Fluidleitelement ist als ein massiver Block aus einem elastischen Material ausgebildet und deckt eine Innenumfangsfläche der Wickelköpfe vollständig ab. Durch die Fluidabweisflächen wird ein auf diese auftreffender Fluidstrom nach axial außen, also in eine von den Wickelköpfen wegführende Richtung abgelenkt, so dass durch diese Ausbildung und Anordnung der Fluidleitelemente die Innenseite der Wickelköpfe nicht von einem Kühlfluid benetzt werden kann. Der Stator wird somit hauptsächlich stirnseitig von einem Kühlfluid benetzt und kann nicht in dem gewünschten Maße effektiv gekühlt werden.

Weiter beschreibt die JP 3070056 U eine elektrische Maschine mit einem Stator, der an dessen Außenumfangsfläche mit einem Statorblechpaket und mit axial überstehenden und mit einer Vergussmasse lediglich außenumfangsseitig vergossenen Wickelköpfen an einem fluidgekühlten Statorträger festgelegt ist. Eine Verlustwärme der elektrischen Maschine wird von einem in dem Statorträger zirkulierenden Kühlfluid abtransportiert. Eine innere Umfangsfläche der Wickelköpfe ist nicht vergossen. Zur Kühlung des Rotors sind keine gesonderten Maßnahmen vorgesehen, so dass dieser lediglich passiv über Wärmeabstrahlung und Wärmeleitung gekühlt wird.

Davon ausgehend, ist es Aufgabe der vorliegenden Erfindung, bei einer vorgegebenen Baugröße eine weitere Leistungssteigerung einer gattungsgemäßen elektrischen Maschine zu ermöglichen. Die Erfindung zielt darauf ab, die Leistungsdichte einer elektrischen Maschine weiter zu steigern, indem Maßnahmen zu einer verbesserten Abführung einer Verlustleistung getroffen werden.

Die vorstehend genannte Aufgabe wird gelöst durch eine elektrische Maschine mit den Merkmalen von Patentanspruch 1. Vorteilhafte Ausgestaltungen und Weiterbildungen der Erfindung sind in den abhängigen Ansprüchen angegeben.

Gemäß der Erfindung ist vorgesehen, dass die mit einem wärmeleitfähigen Kunststoff vergossenen Wickelköpfe sowohl über deren Außenumfangsfläche als auch zusätzlich über deren Innenumfangsfläche gekühlt werden und somit ein Entzug von einer Verlustwärme betragsmäßig gesteigert werden kann.

Im Falle einer elektrischen Innenläufermaschine steht für den Wärmeentzug die Außenumfangsfläche eines Wickelkopfes in bekannter Weise in Wärmeleitkontakt mit einem äußeren Statorträger, während die Innenumfangsfläche eines Wickelkopfes über eine erste Fluidkühleinrichtung mit einem Kühlfluid benetzt werden kann und somit einen Wärmeentzug unmittelbar aus dem Innenraum der elektrischen Maschine ermöglicht. Diese Kühlung über die Innenumfangsflächen der Wickelköpfe ist insbesondere bei einem Innenläufermotor effektiv, da hierbei eine radiale Ausdehnung der Vergussmasse von der zu kühlenden Fläche bis zur Wicklung vergleichsweise gering ist. Somit ist im Vergleich zu einer Außenumfangsfläche der Wickelköpfe die Gefahr eines Wärmestaus von geringerer Bedeutung. Durch die Wirkung der ersten Fluidkühleinrichtung werden ebenso den axialen Stirnseiten der Wickelköpfe Wärme entzogen.

Weiterhin ist bei der vorgeschlagenen elektrischen Maschine ein erstes Fluidleitelement vorgesehen, welches an dem Wickelkopf festgelegt und so ausgebildet ist, dass ein in den Innenraum eingebrachtes Kühlfluid beim Betrieb der elektrischen Maschine im Wesentlichen daran gehindert ist, indem zwischen Rotor und Stator befindlichen Luftspalt einzudringen. Das bedeutet, dass obwohl im Innenraum im Bereich der Wickelköpfe ein freies Fluid vorliegt, dieses nicht in den Luftspalt der elektrischen Maschine eindringen und somit unerwünschte Schlepp- und Leistungsverluste erzeugen kann. Gleichzeitig wird auch ein als ein Öl vorliegendes Kühlfluid vor einer in dem Luftspalt auftretenden unerwünschten thermischen Belastung geschützt, welche zu einer Zerstörung der chemischen Kettenstruktur des Öls und somit zu einer unerwünschten vorzeitigen Degradierung des Öls führen würde.

Das erste Fluidleitelement kann insbesondere scheiben- oder topfförmig ausgebildet sein. Im Rahmen der vorgeschlagenen Lösung weist das erste Fluidleitelement einen Trennwandbereich auf, welcher mit einem radial äußeren Befestigungsabschnitt gegebenenfalls unter Einbeziehung eines Dichtelementes im Wesentlichen fluiddicht an einer Innenumfangsfläche eines Wickelkopfes festgelegt ist und der bis auf eine zentrale Durchgangsöffnung für die Rotorwelle geschlossen ausgeführt ist.

Auf diese Weise wird der Innenraum der elektrischen Maschine nochmals in einen im Wesentlichen trockenen Rotorraum und in dazu axial benachbarte Nassräume für die stirnseitig am Stator befindlichen Wickelköpfe unterteilt.

Gemäß einer vorgeschlagenen Lösung wird das Kühlfluid über die Rotorwelle zugeführt, wozu in dieser ein Fluideinlasskanal ausgebildet ist, der mittels zumindest einer ersten Fluidaustrittsöffnung mit einem, einer Stirnseite des Stators zugewandten Bereich des Innenraums, d. h. einem zuvor erwähnten Nassraum in Fluidverbindung steht. Günstiger Weise sind mehrere Fluidaustrittsöffnungen am Umfang der Rotorwelle verteilt und ebenso an beiden Bereichen der stirnseitig am Stator befindlichen Wickelköpfe vorgesehen.

Zudem ist vorgesehen, den Befestigungsabschnitt des Trennwandbereichs an der Innenumfangsfläche in axialer Richtung rotorseitig von der ersten Fluidaustrittsöffnung anzuordnen, wodurch einer der Wickelköpfe auf einem sich von dem Befestigungsabschnitt zur Stirnseite erstreckenden Abschnitt der Innenumfangsfläche mit Kühlfluid benetzbar ist.

Im Ergebnis der vorgeschlagenen Maßnahmen kann also eine spürbare Leistungssteigerung der elektrischen Maschine erzielt werden. Die erste Fluidkühleinrichtung kann somit auch insbesondere als Ölkühlung ausgeführt werden, wobei diese gleichzeitig, wie weiter unten noch ausführlicher ausgeführt, zur Schmierung der Lager der Rotorwelle herangezogen werden kann.

Mit Vorteil kann das erste Fluidleitelement einen mit einem Wickelkopf zusammenwirkenden Axialanschlag aufweisen. Ein derartiger Axialanschlag legt die axiale Position eines Fluidleitelements in Richtung des Rotors fest und verhindert, dass das Fluidleitelement in den Bereich des Rotors hineingezogen und zerstört wird. Das erste Fluidleitelement kann, wie bereits erwähnt, insgesamt im Wesentlichen topfförmig ausgeführt sein, wobei der Trennwandbereich einen Topfboden bildet und wobei der Axialanschlag an einem mit dem Boden verbundenen zylindrischen Abschnitt ausgeführt ist. Der Axialanschlag kann hierbei insbesondere als ein einseitiger Radialkragen ausgebildet sein, welcher sich in Anlage zu einem aus einer Vergussmasse und dem Wickelkopf gebildeten Vergusskörper befindet. Zudem kann der zylindrische Wandbereich mit einem Radialabstand zu den Wickelköpfen angeordnet sein bzw. verlaufen und in Umfangsrichtung mehrere, insbesondere möglichst großflächige Ausnehmungen zum Durchtreten eines Kühlfluids aufweisen. Eine zusätzliche Lagesicherung des ersten Fluidleitelements kann beispielsweise durch eine Rastverbindung und durch ein Klebemittel erfolgen.

Gemäß einer weiteren Ausführungsform kann sich das erste Fluidleitelement stirnseitig auch axial über einen Wickelkopf hinausgehend erstrecken und sich mit einer axialen Abstützfläche an einem Gehäuseelement, z.B. einem Lagerschild axial abstützen. Mit Vorteil sind an einem solchen Fluidleitelement axial beidseitig wirkende Abstützflächen vorgesehen, so dass damit das Fluidleitelement bei dessen Einbau axial eingebettet oder eingeklemmt werden und dadurch verliersicher am bzw. zum Stator festgelegt werden kann. Weitere Sicherungsmittel können in diesem Fall entfallen.

Mit weiterem Vorteil kann das erste Fluidleitelement im Bereich der zentralen Durchgangsöffnung für die Rotorwelle eine sich zu einer Stirnseite der elektrischen Maschine öffnende Fluidabweisfläche aufweisen, durch welche ein an dieser auftreffendes Fluid in Richtung der Stirnseite abgewiesen wird. Insbesondere kann die Fluidabweisfläche konisch oder sphärisch ausgeführt sein, wodurch ein zum Rotor gerichteter Fluidstrom zurück in den Axialbereich der Wickelköpfe reflektiert wird.

Zur Vermeidung von Wirbelströmen und einer dadurch induzierten Wärmeentwicklung wird weiter vorgeschlagen, das erste Fluidleitelement aus einem nicht ferromagnetischen Werkstoff zu fertigen. Bevorzugt kann dieses aus einem wärmebeständigen Kunststoff insbesondere aus einem Thermo- oder Duroplast Werkstoff gefertigt werden.

Eine verbesserte Abtrennung des Rotorraums gegenüber Fluid wird erzielt, indem im Bereich der ersten Fluidaustrittsöffnung ein zweites Fluidleitelement ausgebildet ist, welches gemeinsam mit dem ersten Fluidleitelement eine Labyrinthdichtung für das Kühlfluid ausbildet. Darüber hinaus sind in diesem Axialbereich an der Rotorwelle Ausnehmungen bzw. Konturen vorgesehen, welche ein Zurückschleudern des Fluids bei laufender Maschine aus dem Rotorraum in den Nassraum bewirken und wozu die genannten Strukturen radial der Fluidabweisfläche des ersten Fluidleitelements gegenüberliegen.

Wie bereits erwähnt, kann die erste Fluidkühleinrichtung zur Kühlung der Wickelköpfe gleichzeitig zur Schmierung der Rotorlager ausgenutzt werden, in dem die Rotorwelle im Bereich des zweiten Fluidleitelements zumindest eine zweite Fluidaustrittsöffnung aufweist, welche axial benachbart zu einem Rotorlager angeordnet ist. Zur Erzielung zu einem Rotorlager gerichteten Fluidströmung kann sich das zweite Fluidleitelement in Richtung des Rotorlagers erstrecken und dabei die zweite Fluidaustrittsöffnung radial beabstandet axial überdecken. Dadurch wird ein aus der zweiten Fluidaustrittsöffnung austretender Fluidstrom durch das zweite Fluidleitelement unmittelbar einem benachbarten Rotorlager zugeführt.

Mit besonderem Vorteil ist die erste Fluidkühleinrichtung als ein Ölkreislauf ausgebildet, welcher durch eine Kühlmittelpumpe und einen Wärmetauscher vervollständigt wird. Während eine Schmiermittel- bzw. Kühlmittelzufuhr über die Rotorwelle erfolgt, ist zur Abführung des Kühlmittels ein Fluidauslasskanal ausgebildet, welcher bezüglich einer Normalbetriebslage der elektrischen Maschine geodätisch zum Stator unten ausgebildet ist. Dieser Fluidauslasskanal steht zumindest mit einer Fluideinlassöffnung mit dem Innenraum der elektrischen Maschine in Fluidverbindung.

Wie bereits angesprochen, wird ein Teil der in den Wickelköpfen entstehenden Verlustwärme über deren Außenumfangsfläche zum Statorträger abgeführt. Diesbezüglich kann es zur weiteren Verbesserung der Wärmeabfuhr von Vorteil sein, wenn die elektrische Maschine eine zweite Fluidkühleinrichtung mit einem am Stator ausgebildeten Fluidkühlmantel aufweist. Diese zweite Fluidkühleinrichtung kann als eine Wasser- oder als eine Ölkühlung ausgebildet sein, wobei der Fluidkühlmantel ein erstes und ein zweites Wandungselement aufweist, welche im Wesentlichen zylindrisch ausgebildet, radial voneinander beabstandet und gegenseitig abgedichtet sind.

Günstiger Weise kann das erste Wandungselement dabei den Statorträger umfassen und das zweite Wandungselement als ein Gehäuse der elektrischen Maschine ausgebildet sein. Die zweite Fluidkühleinrichtung dient damit der Abfuhr der über das Statorblechpaket eingeprägten Verlustwärme und zugleich der in den Wickelköpfen auftretenden Wärmeverluste. Zu diesem Zweck kann sich der Fluidkühlmantel mit Vorteil axial vollständig oder zumindest teilweise über die mit Vergussmasse vergossenen Wickelköpfe am Stator erstrecken.

Nachfolgend wird die Erfindung anhand der beigefügten Figuren beispielhaft beschrieben. Es zeigen:
- Fig. 1: eine schematische Darstellung einer elektrischen Maschine in einem Längsschnitt;
- Fig. 2a,: b eine ausschnittweise vergrößerte Darstellung der elektrischen Maschine von Figur 1 im Bereich der Wickelköpfe des Stators mit dort angeordneten ersten Fluidleitelementen;
- Fig. 3a, b: eine weitere Darstellung einer elektrischen Maschine im Bereich der Wickelköpfe eines Stators mit dort angeordneten ersten Fluidleitelementen gemäß einer alternativen Ausführungsform.

Gleiche Gegenstände, Funktionseinheiten oder vergleichbare Komponenten sind figurenübergreifend mit den gleichen Bezugszeichen bezeichnet. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt. Um Wiederholungen zu vermeiden wird auf eine mehrfache Beschreibung identischer Gegenstände, Funktionseinheiten oder vergleichbarer Komponenten in verschiedenen Ausführungsbeispielen verzichtet und es werden diesbezüglich lediglich Unterschiede der Ausführungsbeispiele beschrieben.

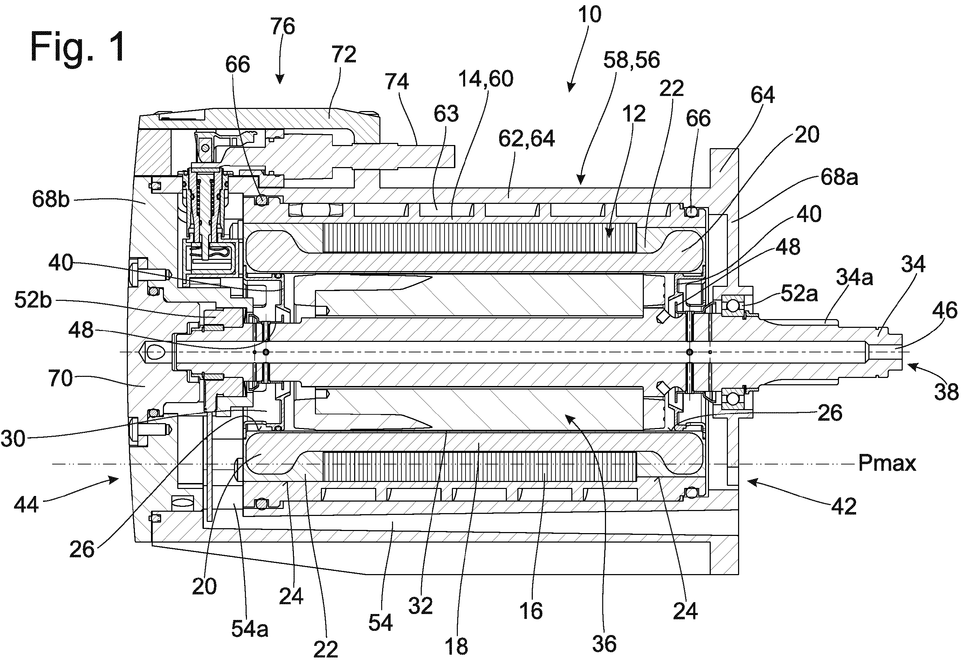

Fig. 1 zeigt eine als Asynchronmotor ausgebildete elektrische Maschine 10, die in einem Antriebstrang eines Kraftfahrzeuges zur Übertragung eines Antriebsmomentes auf Fahrzeugräder vorgesehen ist. Die elektrische Maschine 10 umfasst dazu ein in einem Gehäuse 64 angeordneten Stator 12 und einen in diesem drehbar gelagerten Rotor 36, welcher auf einer Rotorwelle 34 angeordnet ist, über welche eine Leistung zum Antreiben des Fahrzeuges abgegriffen werden kann.

Der Stator 12 umfasst einen zylindrischen Statorträger 14 mit einem daran festgelegten Statorblechpaket 16. Dieses Statorblechpaket 16 ist in einer bekannten Art und Weise mit einem Joch und mit nach radial innen gerichteten Statorzähnen ausgeführt, welche eine Statorwicklung 18 mit axial über das Statorblechpaket 16 überstehenden Wickelköpfen 20 trägt. Die Statorwicklung 18 ist mittels einer Leistungsanschlusseinheit 76 innerhalb eines an dem Gehäuse 64 ausgeführten Schaltkasten 72 mit mehreren externen Anschlussleitungen 74 verbunden, durch welche von einem nicht dargestellten Energiespeicher eine elektrische Leistung in die Statorwicklung 18 eingeprägt werden kann.

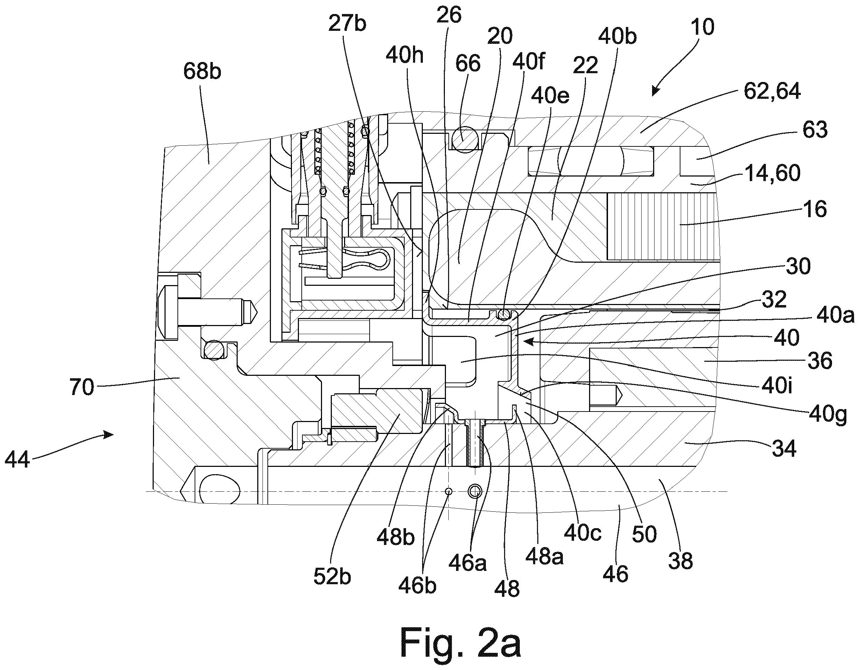

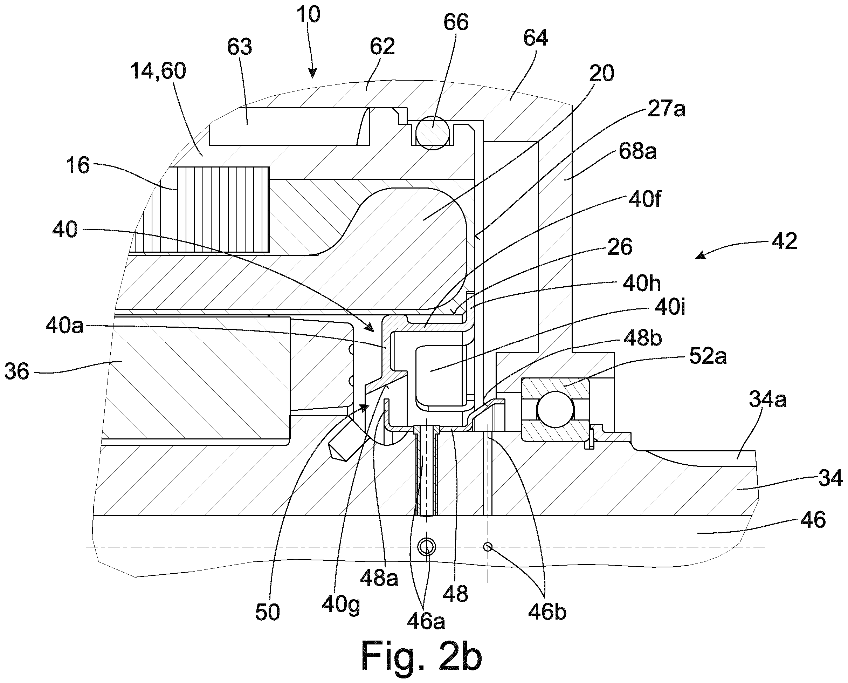

Wie in den Figuren 1; 2a, b erkennbar, erstreckt sich die Statorwicklung 18 axial beidseitig über das Statorblechpaket 16 hinaus und bildet in diesen Bereichen Wickelköpfe 20 aus. Diese Wickelköpfe 20 sind mit einer wärmeleitfähigen Vergussmasse 22, insbesondere einem wärmeleitfähigen Kunststoff vergossen, wodurch jeweils axial beidseitig am Stator 12 eine Außenumfangsfläche 24 und eine Innenumfangsfläche 26 ausgebildet werden. Die Außenumfangsfläche 24 steht dabei im Wärmeleitkontakt mit dem Statorträger 14, welcher als ein erstes Wandungselement 60 eines Fluidkühlmantels 58 ausgebildet ist. Der Fluidkühlmantel 58 umfasst weiter ein gleichfalls im Wesentlichen zylindrisch ausgebildetes, radial von dem ersten Wandungselement 60 beabstandetes und dazu mittels Dichtelementen 66 abgedichtetes zweites Wandungselement 62, welches hierbei als das Gehäuse 64 der elektrischen Maschine 10 ausgeführt ist. Zwischen den Wandungselementen 60, 62 verläuft ein schraubenförmiger Fluidkühlkanal 63, in dem ein beispielsweise als Öl oder Wasser zirkulierendes Kühlmittel zwischen der elektrischen Maschine 10 und einem hier nicht dargestellten Wärmetauscher geführt wird. Insgesamt wird also durch die beschriebene Anordnung eine Fluidkühleinrichtung 56 bereitgestellt.

Der Rotor 36 ist in einer bekannten Weise als Kurzschlussläufer ausgebildet und in einem von dem Stator 12 gebildeten zylindrischen Innenraum 30 unter Ausbildung eines radialen Luftspaltes 32 mittels der Rotorwelle 34 drehbar gelagert. Die Rotorwelle 34 wird durch zwei als Wälzlager ausgeführte Rotorlager 52a, b getragen, welche zum einen in einem als ein Gehäuseboden ausgeführtes Lagerschild 68a und zum weiteren in einem Lagerschild 68b festgelegt sind. Ein aus dem Gehäuseboden bzw. dem Lagerschild 68a axial heraustretenden Abschnitt der Rotorwelle 34 kann über eine dort vorgesehene Verzahnung 34a mit weiteren Komponenten eines Fahrzeugantriebsstranges verbunden werden. Auf der axial gegenüberliegenden Seite ist das Lagerschild 68b mit einem Gehäusedeckel 70 verschlossen.

Zusätzlich zu der Fluidkühleinrichtung 56 weist die elektrische Maschine 10 eine weitere Fluidkühleinrichtung 38, insbesondere mit einem Öl als Kühlfluid auf, mit welchem die Innenumfangsflächen 26 der Wickelköpfe 20 und zumindest auch teilweise deren Stirnflächen 27a, b benetzt werden können. Zu diesem Zweck ist innerhalb der Rotorwelle 34 ein Fluideinlasskanal 46 ausgeführt, der an beiden axialen Positionen der Wickelköpfe 20 mehrere erste Fluidaustrittsöffnungen 46a aufweist (Fig.2a, b). Diese Fluidaustrittsöffnungen 46a stehen somit mit denjenigen, den Stirnseiten 42, 44 der elektrischen Maschine 10 zugewandten Bereichen des Innenraums 30 in einer Fluidverbindung. Zur Vermeidung eines Übertritts von Fluid in den axialen Bereich des Rotors 36 sind vorliegend an beiden Wickelkopfpositionen erste Fluidleitelemente 40 vorgesehen, welche jeweils an einem vergossenem Wickelkopf 20 festgelegt und so ausgebildet sind, dass ein in den Innenraum 30 eingebrachtes Fluid beim Betrieb der elektrischen Maschine 10 im Wesentlichen daran gehindert ist, in den zwischen Rotor 36 und Stator 12 befindlichen Luftspalt 32 einzudringen.

Insbesondere weist ein derartiges erstes Fluidleitelement 40 einen im Wesentlichen geschlossenen Trennwandbereich 40a auf, welcher mit einem radial äußeren Befestigungsabschnitt 40b unter Einfügung eines Dichtelements 40e im Wesentlichen fluiddicht an der Innenumfangsfläche 26 eines Wickelkopfes 20 festgelegt ist. Dieser Trennwandbereich 40a ist dabei bis auf eine zentrale Durchgangsöffnung 40c für die Rotorwelle 34 geschlossen ausgeführt.

Wie in den Fig. 1; 2a, b erkennbar, ist das Fluidleitelement 40 im Wesentlichen topfförmig ausgeführt, wobei der Trennwandbereich 40a einen Boden ausbildet. Von diesem Trennwandbereich 40a erstreckt sich ein zylindrischer Abschnitt 40f in Richtung der Stirnseite 44 und greift mit einem als nach radial außen abstehenden Ringkragen 40h stirnseitig an der Vergussmasse des Wickelkopfes 20 an. Der zylindrische Abschnitt 40f ist dabei mit einem radialen Abstand zu der Innenumfangsfläche 26 eines Wickelkopfes 20 geführt und weist mehrere am Umfang verteilte großflächige Ausnehmungen 40i auf, durch welche das Kühlfluid zu den Wickelköpfen 20 hindurchtreten kann. Ein erstes Fluidleitelement 40 bildet radial innen im Bereich der Durchgangsöffnung 40c eine sich zu einer Stirnseite 42, 44 der elektrischen Maschine 10 öffnende Fluidabweisfläche 40g auf, durch welche ein an dieser auftreffendes Fluid in Richtung der Stirnseite 42, 44 abgewiesen und vom Rotorraum ferngehalten wird. Es ist weiter erkennbar, dass die Rotorwelle 34 im Bereich der ersten Fluidaustrittsöffnung 46a ein zweites Fluidleitelement 48 aufweist, welches gemeinsam mit dem ersten Fluidleitelement 40 eine Labyrinthdichtung 50 für das Kühlfluid ausbildet. Ein solches zweites Fluidleitelement 48 ist als eine auf die Rotorwelle 34 aufgeschobene Hülse ausgeführt und bildet radial dem ersten Fluidleitelement 40 im Bereich der Fluidabweisfläche 40g gegenüberliegend einen nach radial außen abstehenden Ringkragen 48a auf, sodass dadurch aus den Elementen 40g und 48a eine Labyrinthdichtung 50 gebildet wird, welche beim Drehen des Rotors 36 ein Eindringen von Kühlfluid in den Raumbereich des Rotors 36 im Wesentlichen verhindert. Das erste Fluidleitelement 40 ist vorliegend aus einem nicht ferromagnetischen Material, insbesondere aus einem wärmebeständigen Kunststoff gefertigt, während das zweite Fluidleitelement 48 als ein Kunststoff- oder ein Metallelement bspw. als eine Blechhülse dargestellt werden kann.

Zur Schmierung der Rotorlager 52a, b sind an der Rotorwelle 34 im Bereich des zweiten Fluidleitelements 48 zweite Fluidaustrittsöffnungen 46b vorgesehen. Diese Fluidaustrittsöffnung 46b sind axial benachbart zu den Rotorlagern 52a, b angeordnet und werden von einem Leitabschnitt 48b des zweiten Fluidleitelements 48 überdeckt. Mit anderen Worten erstreckt sich das zweite Fluidleitelement 48 in Richtung eines Rotorlagers 52a, b und überdeckt dabei mit radialem Abstand die zweiten Fluidaustrittsöffnungen 46b. Somit kann ein aus den zweiten Fluidaustrittsöffnungen 46b austretender Fluidstrom durch die zweiten Fluidleitelemente 48 gezielt auf die Rotorlager 52a, b gerichtet werden.

Zur Abführung des im Innenraum 30 befindlichen Fluids weist die Fluidkühleinrichtung 38 einen in einer normalen Betriebslage der elektrischen Maschine 10 geodätisch zum Stator 12 unten ausgebildeten Fluidauslasskanal 54 (Fig. 1) auf, der mittels einer Fluideintrittsöffnung 54a mit dem Innenraum 30 in Fluidverbindung steht. In Fig. 1 ist zu dem ein von dem Kühlfluid einnehmbarer maximaler Pegel Pmax. eingezeichnet, der in dieser Betriebslage radial zwischen dem Luftspalt 32 und der Fluideintrittsöffnung 54 eingestellt ist. Zurückkommend auf die Fluidkühleinrichtung 56 ist ferner erkennbar, dass sich der Fluidkühlmantel 58 am Stator 12 in axialer Richtung fast vollständig über die mit der Vergussmasse 22 vergossenen Wickelköpfe 20 erstreckt.

Zur Herstellung der elektrischen Maschine kann zunächst der Stator 12 mit dem Statorblechpaket 16 und der Statorwicklung 18 gefertigt werden, wobei axial beidseitig Wickelköpfe 20 über das Statorblechpaket 16 überstehen. In einem weiteren Schritt wird diese vorgefertigte Baueinheit in den zylindrischen Statorträger 14 eingefügt, worauf die Wickelköpfe 20 mit einer Vergussmasse 22 vergossen werden können. Die somit geschaffene Einheit kann dann in das Gehäuse 64 eingefügt werden, wobei auf der durch das den Gehäuseboden ausbildende Lagerschild 68a bereits ein erstes Fluidleitelement 40 an den Wickelköpfen festgelegt wird. Im Weiteren kann nun der Rotor 36 mit den zweiten Fluidleitelementen 48 eingefügt werden, wobei die Rotorwelle 34 auf der genannten Seite 42 des Lagerschildes 68a durch das Rotorlager 52a geführt wird. Nachfolgend wird auf der freien Axial-bzw. Stirnseite 44 ebenso das erste Fluidleitelement 40 am Wickelkopf 20 festgelegt. Nach der Anordnung der Leistungsanschlusseinheit 76 kann auch diese Stirnseite durch das Lagerschild 68b und den Gehäusedeckel 70 verschlossen werden.

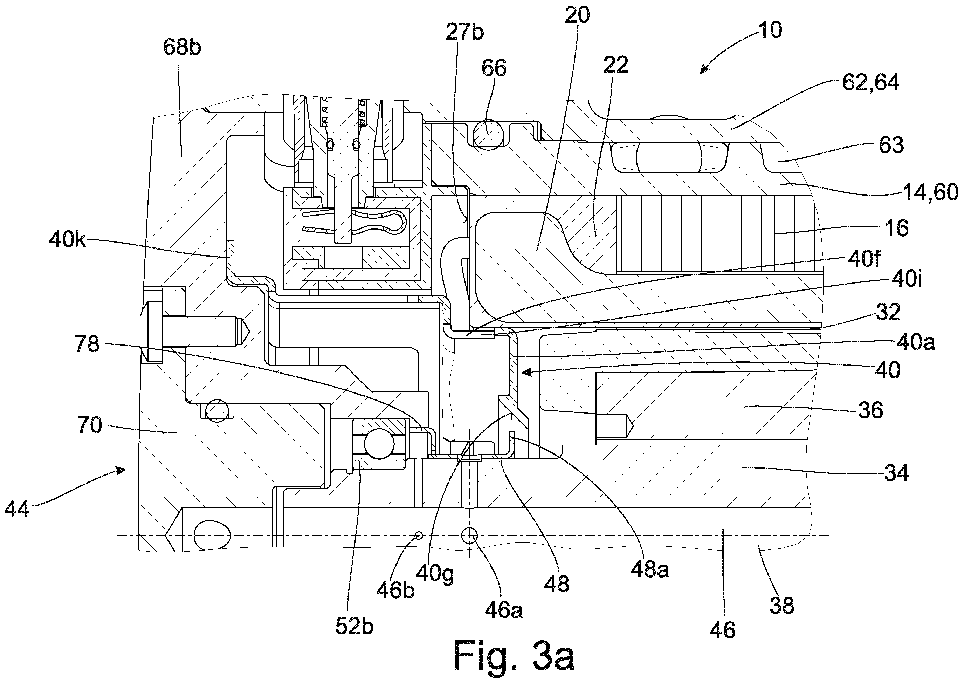

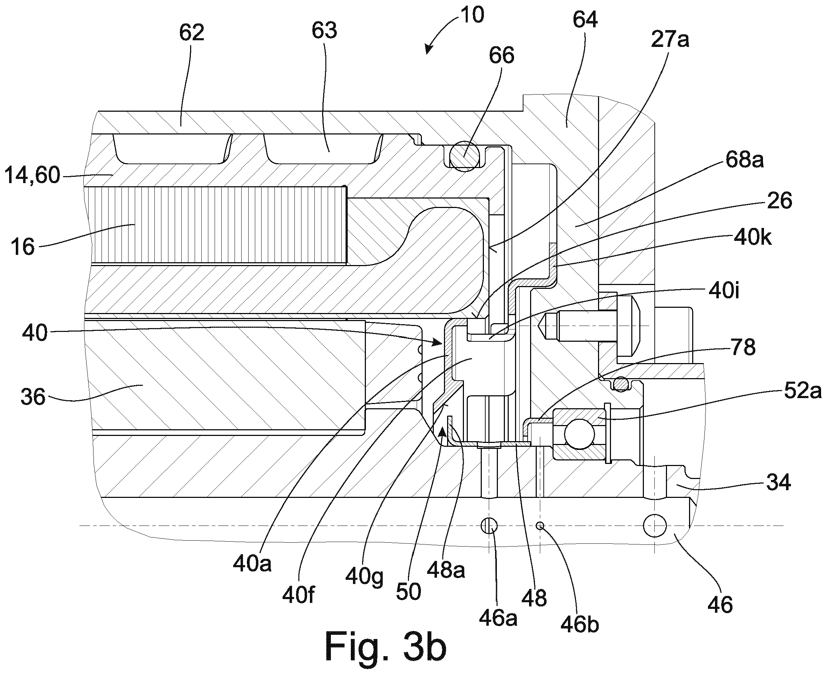

Mit den Fig. 3a, b ist ausschnittweise eine zu der vorstehend erläuterten elektrischen Maschine 10 alternative Ausführungsform einer elektrischen Maschine 10 dargestellt, wobei zu deren grundlegenden Aufbau auf die vorangehende Figurenbeschreibung verwiesen wird. Gemäß dieser Ausführungsform erstreckt sich das erste Fluidleitelement 40 stirnseitig axial über einen Wickelkopf 20 hinaus und stützt sich axial mit einer Abstützfläche 40k unmittelbar oder mittelbar an dem Gehäuse 64, insbesondere an dem Lagerschild 68b (Fig. 3a) oder an dem Gehäuseboden 64a (Fig. 3b) ab.

Mit Vorteil sind an einem solchen Fluidleitelement 40 axial beidseitig wirkende Abstützflächen vorgesehen, so dass damit das Fluidleitelement 40 bei dessen Einbau in den Innenraum 30 axial eingebettet oder eingeklemmt und dadurch verliersicher am bzw. zum Stator festgelegt wird. Zum Durchtritt eines radial aus der Rotorwelle 34 austretenden Kühlfluids zu den Wickelköpfen 20 sind an den hier topf- oder becherförmigen ersten Fluidleitelementen 40 in Umfangsrichtung wiederum mehrere Aussparungen 40i vorgesehen, welche sich axial über das Ende der Wickel köpfe 20 hinaus in Richtung der Stirnseiten 42, 44 des Stators 12 erstrecken. Dadurch kann das Kühlfluid sowohl die Innenumfangsflächen 26 als auch die Stirnflächen 27a, b der Wickelköpfe 20 erreichen und kühlen. Die zweiten Fluidleitelemente 48 sind von den ersten Fluidaustrittsöffnungen 46a aus in Richtung Rotor betrachtet identisch zu denjenigen in den Fig. 1, 2a, b dargestellten ausgeführt. Dagegen ist zur Zuführung von Kühl- oder Schmierfluid zu den Rotorlagern 52a, b an den Lagerschilden 68a, b jeweils ein feststehendes ringkappenförmiges Leitelement 78 vorgesehen, welches die zweiten Fluidaustrittsöffnungen 46b mit einem radialen Abstand axial überdeckt.

**Bezugszeichen**

| | | | |
|---|---|---|---|
| 10 | Elektrische Maschine | 46b | zweite Fluidaustrittsöffnung |
| 12 | Stator | 48 | zweites Fluidleitelement |
| 14 | Statorträger | 48a | Ringkragen |
| 16 | Statorblechpaket | 48b | Leitabschnitt |
| 18 | Statorwicklung | 50 | Labyrinthdichtung |
| 20 | Wickelkopf | 52a, b | Rotorlager |
| 22 | Vergussmasse | 54 | Fluidauslasskanal |
| 24 | Außenumfangsfläche | 54a | Fluideintrittsöffnung |
| 26 | Innenumfangsfläche | 56 | zweite Fluidkühleinrichtung |
| 27a, b | Stirnfläche | 58 | Fluidkühlmantel |
| 30 | Innenraum | 60 | erstes Wandungselement |
| 32 | Luftspalt | 62 | zweites Wandungselement |
| 34 | Rotorwelle | 63 | Fluidkühlkanal |
| 34a | Verzahnung | 64 | Gehäuse |
| 36 | Rotor | 66 | Dichtelement |
| 38 | erste Fluidkühleinrichtung | 68a,b | Lagerschild |
| 40 | erstes Fluidleitelement | 70 | Gehäusedeckel |
| 40a | Trennwandbereich | 72 | Schaltkasten |
| 40b | Befestigungsabschnitt | 74 | Anschlussleiter |
| 40c | Durchgangsöffnung | 76 | Leistungsanschlusseinheit |
| 40d | Axialanschlag | Pmax. | Maximaler Kühlfluidpegel |
| 40e | Dichtelement | 78 | Leitelement |
| 40f | zylindrischer Abschnitt | | |
| 40g | Fluidabweisfläche | | |
| 40h | Ringkragen | | |
| 40i | Ausnehmung | | |
| 40k | axiale Abstützfläche | | |
| 42, 44 | Stirnseite | | |
| 46 | Fluideinlasskanal | | |
| 46a | erste Fluidaustrittsöffnung | | |

## Patentansprüche

1. Elektrische Maschine (10), umfassend
- einen Stator (12) mit einem Statorträger (14) und mit einem daran festgelegten Statorblechpaket (16), welches
- eine Statorwicklung 18 mit axial über das Statorblechpaket (16) überstehenden Wickelköpfen (20) trägt, wobei
- ein Wickelkopf (20) mit einer wärmeleitfähigen Vergussmasse (22) vergossen ist, welche
- eine Außenumfangsfläche (24) und eine Innenumfangsfläche (26) ausbildet, wobei
- die Außenumfangsfläche (24) im Wärmeleitkontakt mit einem Statorträger (14) steht und wobei
- der Stator (12) einen zylindrischen Innenraum (30) aufweist, in dem unter Ausbildung eines radialen Luftspaltes (32) ein mittels einer Rotorwelle (34) drehbar gelagerter Rotor (36) angeordnet ist,
**dadurch gekennzeichnet, dass**
- die elektrische Maschine (10) eine erste Fluidkühleinrichtung (38) zur Benetzung der Innenumfangsfläche (26) eines Wickelkopfes (20) mit einem Kühlfluid aufweist, wobei
- zumindest ein erstes Fluidleitelement (40) vorgesehen ist, welches an dem Wickelkopf (20) festgelegt und so ausgebildet ist, dass ein in den Innenraum (30) eingebrachtes Kühlfluid beim Betrieb der elektrischen Maschine (10) im Wesentlichen daran gehindert ist, in den zwischen Rotor (36) und Stator (12) befindlichen Luftspalt (32) einzudringen und wobei
- das erste Fluidleitelement (40) einen Trennwandbereich (40a) aufweist, welcher mit einem radial äußeren Befestigungsabschnitt (40b) im Wesentlichen fluiddicht an der Innenumfangsfläche (26) eines Wickelkopfes (20) festgelegt ist und der bis auf eine zentrale Durchgangsöffnung (40c) für die Rotorwelle (34) geschlossen ausgeführt ist und wobei weiter
- die erste Fluidkühleinrichtung (38) einen in der Rotorwelle (34) ausgebildeten Fluideinlasskanal (46) umfasst, der mittels zumindest einer ersten Fluidaustrittsöffnung (46a) mit einem, einer Stirnseite (42, 44) des Stators (12) zugewandten Bereich des Innenraums (30) in Fluidverbindung steht, wobei
- der Befestigungsabschnitt (40b) an der Innenumfangsfläche (26) in axialer Richtung rotorseitig von der ersten Fluidaustrittsöffnung (46a) angeordnet ist und wobei
- einer der Wickelköpfe (20) auf einem sich von dem Befestigungsabschnitt (40b) zur Stirnseite (42, 44) erstreckenden Abschnitt der Innenumfangsfläche (26) mit Kühlfluid benetzbar ist.

2. Elektrische Maschine nach Anspruch 1, **dadurch gekennzeichnet,**
**dass** das erste Fluidleitelement (40) einen mit einem Wickelkopf (20) zusammenwirkenden Axialanschlag (40h) aufweist.

3. Elektrische Maschine nach Anspruch 1 oder 2, **dadurch gekennzeichnet, dass** das erste Fluidleitelement (40) im Bereich der Durchgangsöffnung (40c) eine sich zu einer Stirnseite (42, 44) der elektrischen Maschine (10) öffnende FluidAbweisfläche (40g) aufweist, durch welche ein an dieser auftreffendes Fluid in Richtung der Stirnseite (42, 44) abgewiesen wird.

4. Elektrische Maschine nach einem der Ansprüche 1 - 3, **dadurch gekennzeichnet, dass** das erste Fluidleitelement (40) aus einem nicht-ferromagnetischen Werkstoff gefertigt ist.

5. Elektrische Maschine nach einem der Ansprüche 1 - 4, **dadurch gekennzeichnet, dass** die Rotorwelle (34) im Bereich der ersten Fluidaustrittsöffnung (46a) ein zweites Fluidleitelement (48) aufweist, welches gemeinsam mit dem ersten Fluidleitelement (40) eine Labyrinthdichtung (50) für das Kühlfluid ausbildet.

6. Elektrische Maschine nach Anspruch 5, **dadurch gekennzeichnet, dass** die Rotorwelle (34) im Bereich des zweiten Fluidleitelements (48) zumindest eine zweite Fluidaustrittsöffnung (46b) aufweist, welche axial benachbart zu einem Rotorlager (52a, b) angeordnet ist und wobei das zweite Fluidleitelement (48) sich in Richtung des Rotorlagers (52a, b) erstreckt und dabei die zweite Fluidaustrittsöffnung (46b) radial beabstandet axial überdeckt.

7. Elektrische Maschine nach einem der Ansprüche 1 - 6, **dadurch gekennzeichnet, dass** die erste Fluidkühleinrichtung (38) einen in einer Betriebslage der elektrischen Maschine (10) geodätisch zum Stator (12) unten ausgebildeten Fluidauslasskanal (54) umfasst, der mittels zumindest einer Fluideintrittsöffnung (54a) mit dem Innenraum (30) in Fluidverbindung steht.

8. Elektrische Maschine nach einem der Ansprüche 1 - 7, **dadurch gekennzeichnet, dass** die elektrische Maschine (10) eine zweite Fluidkühleinrichtung (56) mit einem am Stator (12) ausgebildeten Fluidkühlmantel (58) aufweist.

9. Elektrische Maschine nach Anspruch 8, **dadurch gekennzeichnet, dass** der Fluidkühlmantel (58) ein erstes (60) und ein zweites Wandungselement (62) aufweist, welche im Wesentlichen zylindrisch ausgebildet, radial voneinander beabstandet und gegenseitig abgedichtet sind.

10. Elektrische Maschine nach Anspruch 9, **dadurch gekennzeichnet, dass** das erste Wandungselement (60) den Statorträger (14) umfasst und dass das zweite Wandungselement (62) als Gehäuse (64) der elektrischen Maschine (10) ausgebildet ist.

11. Elektrische Maschine nach einem der Ansprüche 8 - 10, **dadurch gekennzeichnet, dass** sich der Fluidkühlmantel (58) am Stator (12) axial vollständig oder zumindest teilweise über die mit Vergussmasse (22) vergossenen Wickelköpfe (20) erstreckt.

## Claims

1. Electric machine comprising
- a stator (12) having a stator carrier (14) and having a stator lamination stack (16) which is fixed thereto and which
- carries a stator winding (18) having winding heads (20) which axially project beyond the stator lamination stack (16), wherein
- a winding head (20) is potted with a thermally conductive potting compound (22) which
- forms an outer circumferential surface (24) and an inner circumferential surface (26), wherein
- the outer circumferential surface (24) is in thermally conductive contact with a stator carrier (14), and wherein
- the stator (12) has a cylindrical interior space (30) in which a rotor (36) which is mounted rotatably by means of a rotor shaft (34) is arranged so as to form a radial air gap (32),
**characterized in that**
- the electric machine (10) has a first fluid cooling device (38) for wetting the inner circumferential surface (26) of a winding head (20) with a cooling fluid, wherein
- provision is made of at least one first fluid-guiding element (40), which is fixed to the winding head (20) and is formed such that a cooling fluid introduced into the interior space (30), during operation of the electric machine (10), is substantially prevented from entering the air gap (32) situated between rotor (36) and stator (12), and wherein
- the first fluid-guiding element (40) has a separating wall region (40a) which, with a radially outer fastening portion (40b), is fixed in a substantially fluid-tight manner to the inner circumferential surface (26) of a winding head (20) and which is formed to be closed apart from a central passage opening (40c) for the rotor shaft (34), and wherein further
- the first fluid cooling device (38) comprises a fluid inlet channel (46) which is formed in the rotor shaft (34) and which, by means of at least one first fluid exit opening (46a), is fluidically connected to a region of the interior space (30) that faces a face side (42, 44) of the stator (12), wherein
- the fastening portion (40b) is arranged on the inner circumferential surface (26) so as to be on the rotor side of the first fluid exit opening (46a) in the axial direction, and wherein
- one of the winding heads (20) is able to be wetted with cooling fluid on a portion of the inner circumferential surface (26) that extends from the fastening portion (40b) towards the face side (42, 44).

2. Electric machine according to Claim 1, **characterized in that** the first fluid-guiding element (40) has an axial stop (40h) which interacts with a winding head (20) .

3. Electric machine according to Claim 1 or 2, **characterized in that**, in the region of the passage opening (40c), the first fluid-guiding element (40) has a fluid-diverting surface (40g) which opens towards a face side (42, 44) of the electric machine (10) and by way of which a fluid impinging thereon is diverted into the direction of the face side (42, 44) .

4. Electric machine according to one of Claims 1-3, **characterized in that** the first fluid-guiding element (40) is manufactured from a non-ferromagnetic material.

5. Electric machine according to one of Claims 1-4, **characterized in that**, in the region of the first fluid exit opening (46a), the rotor shaft (34) has a second fluid-guiding element (48), which, together with the first fluid-guiding element (40), forms a labyrinth seal (50) for the cooling fluid.

6. Electric machine according to Claim 5, **characterized in that**, in the region of the second fluid-guiding element (48), the rotor shaft (34) has at least one second fluid exit opening (46b), which is arranged axially adjacent to a rotor bearing (52a,b), and wherein the second fluid-guiding element (48) extends in the direction of the rotor bearing (52a,b) and in the process axially covers the second fluid exit opening (46b) so as to be radially spaced apart therefrom.

7. Electric machine according to one of Claims 1-6, **characterized in that** the first fluid cooling device (38) comprises a fluid outlet channel (54) which, in an operating position of the electric machine (10), is formed to be geodetically at the bottom with respect to the stator (12) and which is fluidically connected by means of at least one fluid inlet opening (54a) to the interior space (30).

8. Electric machine according to one of Claims 1-7, **characterized in that** the electric machine (10) has a second fluid cooling device (56), which has a fluid cooling jacket (58) formed on the stator (12).

9. Electric machine according to Claim 8, **characterized in that** the fluid cooling jacket (58) has a first wall element (60) and a second wall element (62), which wall elements are of substantially cylindrical form, are radially spaced apart from one another and are sealed off with respect to one another.

10. Electric machine according to Claim 9, **characterized in that** the first wall element (60) comprises the stator carrier (14), and **in that** the second wall element (62) is formed as a housing (64) of the electric machine (10).

11. Electric machine according to one of Claims 8-10, **characterized in that** the fluid cooling jacket (58) on the stator (12) axially extends completely or at least partially over the winding heads (20), which are potted with potting compound (22).

## Revendications

1. Machine électrique (10), comprenant
- un stator (12) pourvu d'un porte-stator (14) et d'un empilage de tôles de stator (16) fixé à celui-ci, lequel
- supporte un enroulement de stator (18) ayant des têtes d'enroulement (20) qui font saillie au-dessus de l'empilage de tôles de stator (16),
- une tête d'enroulement (20) étant encapsulée avec une masse de scellement (22) thermoconductrice, laquelle
- forme une surface périphérique extérieure (24) et une surface périphérique intérieure (26),
- la surface périphérique extérieure (24) se trouvant en contact thermoconducteur avec un porte-stator (14) et
- le stator (12) possédant un espace intérieur (30) cylindrique dans lequel est disposé un rotor (36), monté à rotation au moyen d'un arbre de rotor (34), en formant un entrefer radial (32),
**caractérisée en ce que**
- la machine électrique (10) possède un premier dispositif de refroidissement par fluide (38) destiné à imprégner la surface périphérique intérieure (26) d'une tête d'enroulement (20) avec un fluide de refroidissement,
- au moins un premier élément de conduite de fluide (40) étant présent, lequel est fixé à la tête d'enroulement (20) et configuré de telle sorte qu'un fluide de refroidissement introduit dans l'espace intérieur (30) est sensiblement empêché, lors du fonctionnement de la machine électrique (10), de pénétrer dans l'entrefer (32) qui se trouve entre le rotor (36) et le stator (12), et
- le premier élément de conduite de fluide (40) possédant une zone de paroi de séparation (40a) qui est fixée par une portion de fixation (40b) radialement extérieure de manière sensiblement étanche aux fluides à la surface périphérique intérieure (26) d'une tête d'enroulement (20) et qui est réalisée fermée, à l'exception d'une ouverture de passage (40c) centrale pour l'arbre de rotor (34), et de plus
- le premier dispositif de refroidissement par fluide (38) comportant un canal d'admission de fluide (46) formé dans l'arbre de rotor (34), lequel se trouve en liaison fluidique au moyen d'au moins une première ouverture de sortie de fluide (46a) avec une zone de l'espace intérieur (30) qui fait face à un côté frontal (42, 44) du stator (12),
- la portion de fixation (40b) étant disposée au niveau de la surface périphérique intérieure (26) dans la direction axiale du côté du rotor par rapport à la première ouverture de sortie de fluide (46a) et
- l'une des têtes d'enroulement (20) pouvant être imprégnée de fluide de refroidissement sur une portion de la surface périphérique intérieure (26) qui s'étend de la portion de fixation (40b) au côté frontal (42, 44).

2. Machine électrique selon la revendication 1, **caractérisée en ce que** le premier élément de conduite de fluide (40) possède une butée axiale (40h) qui coopère avec une tête d'enroulement (20).

3. Machine électrique selon la revendication 1 ou 2, **caractérisée en ce que** le premier élément de conduite de fluide (40) possède dans la zone de l'ouverture de passage (40c) une surface déflectrice de fluide (40g) qui s'ouvre vers un côté frontal (42, 44) de la machine électrique (10), par laquelle un fluide qui vient heurter celle-ci est dévié en direction du côté frontal (42, 44).

4. Machine électrique selon l'une des revendications 1 à 3, **caractérisée en ce que** le premier élément de conduite de fluide (40) est fabriqué dans un matériau non ferromagnétique.

5. Machine électrique selon l'une des revendications 1 à 4, **caractérisée en ce que** l'arbre de rotor (34) possède un deuxième élément de conduite de fluide (48) dans la zone de la première ouverture de sortie de fluide (46a), lequel forme, conjointement avec le premier élément de conduite de fluide (40), une garniture d'étanchéité en labyrinthe (50) pour le fluide de refroidissement.

6. Machine électrique selon la revendication 5, **caractérisée en ce que** l'arbre de rotor (34) possède dans la zone du deuxième élément de conduite de fluide (48) au moins une deuxième ouverture de sortie de fluide (46b) qui est disposée axialement à côté d'un palier de rotor (52a, b) et le deuxième élément de conduite de fluide (48) s'étendant dans la direction du palier de rotor (52a, b) et recouvrant ainsi la deuxième ouverture de sortie de fluide (46b) avec un espacement radial.

7. Machine électrique selon l'une des revendications 1 à 6, **caractérisée en ce que** le premier dispositif de refroidissement par fluide (38) comporte un canal d'évacuation de fluide (54) formé géodésiquement en bas par rapport au stator (12) dans une position de fonctionnement de la machine électrique (10), lequel se trouve en liaison fluidique avec l'espace intérieur (30) au moyen d'au moins une ouverture d'entrée de fluide (54a).

8. Machine électrique selon l'une des revendications 1 à 7, **caractérisée en ce que** la machine électrique (10) possède un deuxième dispositif de refroidissement par fluide (56) pourvu d'une enveloppe de refroidissement par fluide (58) formée sur le stator (12).

9. Machine électrique selon la revendication 8, **caractérisée en ce que** l'enveloppe de refroidissement par fluide (58) possède un premier (60) et un deuxième élément de paroi (62) qui sont de configuration sensiblement cylindrique, espacés radialement l'un de l'autre et rendus mutuellement étanches.

10. Machine électrique selon la revendication 9, **caractérisée en ce que** le premier élément de paroi (60) comporte le porte-stator (14) et **en ce que** le deuxième élément de paroi (62) est réalisé sous la forme d'un carter (64) de la machine électrique (10).

11. Machine électrique selon l'une des revendications 8 à 10, **caractérisée en ce que** l'enveloppe de refroidissement par fluide (58) s'étend sur le stator (12) dans le sens axial entièrement ou au moins partiellement au-dessus des têtes d'enroulement (20) encapsulées avec la masse de scellement (22).
